(19) Europäisches Patentamt
European Patent Office
Office européen des brevets

(11) Veröffentlichungsnummer: **0 011 049**
**B1**

(12) **EUROPÄISCHE PATENTSCHRIFT**

(45) Veröffentlichungstag der Patentschrift: **04.08.82**

(51) Int. Cl.³: **C 08 G 12/30**, C 08 G 12/40, C 09 D 3/50

(21) Anmeldenummer: **79810105.1**

(22) Anmeldetag: **28.09.79**

(54) **Aminoplastharz, die Herstellung desselben und seine Verwendung.**

(30) Priorität: **04.10.78 GB 3930078**

(43) Veröffentlichungstag der Anmeldung: **14.05.80 Patentblatt 80/10**

(45) Bekanntmachung des Hinweises auf die Patenterteilung: **04.08.82 Patentblatt 82/31**

(84) Benannte Vertragsstaaten: **BE DE FR GB IT NL SE**

(56) Entgegenhaltungen:
**DE-A-2 031 036**
**FR-A-2 048 539**
**GB-A-948 863**
**GB-A-1 026 696**
**US-A-3 464 529**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Patentabteilung Postfach, CH-4002 Basel (CH)**

(72) Erfinder: **Massy, Derek James Rowland, 1 Green Lane, Linton, Cambridge CB1 6JZ (GB)**
Erfinder: **Winterbottom, Kenneth, 103 Duxford Road, Whittlesford, Cambridge CB2 4NJ (GB)**

**EP 0 011 049 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Aminoplastharz, die Herstellung desselben und seine Verwendung

Die Erfindung betrifft ein neues Verfahren zur Herstellung von Aminoplast-Harzen, insbesondere von verlängerten, verätherten Methylguanaminharzen, diese Harze selbst und ihre Verwendung als Beschichtungskompositionen.

Verätherte Methylolguanaminharze sind allgemein wohl bekannte, käuflich erwerbbare Materialien und werden auf zahlreichen Gebieten angewendet, speziell als flüssige oder Pulverbeschichtungs-Mischungen. Sie werden in der Weise hergestellt, daß man ein Guanamin mit Formaldehyd oder einem Formaldehyd-Donor wie Paraformaldehyd unter neutralen oder basischen Bedingungen zur Reaktion bringt. Dabei bildet sich das Methylolgruppen aufweisende Guanamin. Letzteres wird in saurem Milieu mit einem Alkonol veräthert (siehe z. B. GB-Patent No. 1 026 696). Derartiges Material wird häufig mit einem alkoholische OH-Gruppen enthaltenden Harz, wie Alkydharz, Polyester, Acrylsäureharz oder Polyepoxidharz, gemischt und in Gegenwart eines sauren Katalysators bei erhöhter Temperatur gehärtet. Im Falle des Einsatzes größerer Mengen an saurem Katalysator genügt Raumtemperatur für die Härtung. Auch Carboxylgruppen enthaltende Harze sind als Koreaktanten verwendet worden.

Für bestimmte Anwendungen, z. B. für die Herstellung von Pulverbeschichtungsmittel, wird der Einsatz von bei Raumtemperatur oder leicht erhöhter Temperatur nicht-klebrigen verätherten Methylguanaminharzen bevorzugt. Viele käuflich erwerbliche verätherte Methylguanaminharze sind klebrige, hochviskose Flüssigkeiten und können deshalb nicht für Pulverbeschichtungsmittel verwendet werden.

Ferner ist sehr wohl bekannt, daß, wenn Butanol als Verätherungsmittel verwendet wird, das resultierende Harz voll verträglich ist mit vielen Koreaktanten und Lösungsmitteln, daß dagegen eine solch gute Verträglichkeit nicht immer gegeben ist, wenn andere niedrige Alkohole verwendet werden. Die vollkommene Entfernung des Butanols aus dem Harz ist jedoch nicht leicht durchzuführen und seine Gegenwart (sowohl nach der Verätherung verbleibend als auch bei Freisetzung durch die Härtung) macht eine Handhabung ohne wirkungsvolle Lüftung fast unmöglich.

Gemäß dem erfindungsgemäßen Verfahren können nun verätherte Methylguanaminharze hergestellt werden, welche bei Raumtemperatur und bei leicht erhöhter Temperatur fest sind, welche mit einem weiten Bereich von Koreaktanten und Lösungsmitteln gut verträglich sind und welche weder Butanol enthalten oder Butanol beim Härten freisetzen.

Aus dem GB-Patent No. 948 853 ist es bekannt, eine modifizierte Aminoplastharz-Komposition in der Weise herzustellen, daß man

1. ein partiell polymerisiertes Aminotriazinharz aus einem Aldehyd, speziell Formaldehyd, und einem Aminotriazen, welches im allgemeinen Melamin ist aber auch ein Guanamin sein kann, herstellt,
2. eine kleine Menge eines Aminotriazins zu dem partiell polymerisierten Aminoplastharz (welches normalerweise nicht veräthert ist) zusetzt,
3. den erhaltenen Sirup für eine kurze Zeit erhitzt, und
4. den heißen Sirup kühlt und denselben dann mit einer kleinen Menge von einem Amin oder mehreren vermischt.

Das Produkt kann für die Herstellung von Glasfaserlaminaten gebraucht werden.

Das GB-Patent No. 1 048 710 beschreibt die Umsetzung von Benzoguanamin und Formaldehyd zur Herstellung eines monomeren Reaktionsproduktes, welches danach mit Melamin behandelt wird unter Zusatz eines Polymerisationskatalysators. Das Produkt ist ebenfalls nicht veräthert.

Gegenstand der vorliegenden Erfindung ist ein Verfahren zur Herstellung eines verlängerten, Methyl-methylolgruppen enthaltenden Guanaminharzes durch Reaktion eines Methyl-methylolgruppen enthaltenden Guanamins der Formel I

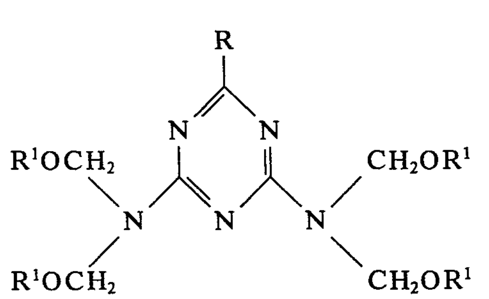

(I)

in der R eine Alkylgruppe mit 1 bis 16 C-Atomen, eine Phenylgruppe oder eine Gruppe der Formel II

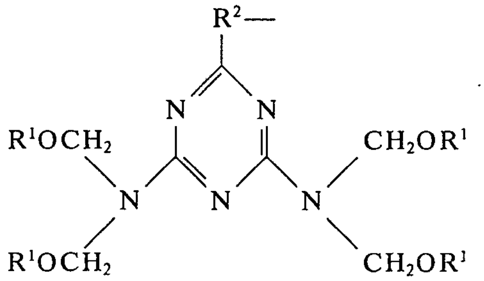

(II)

bedeutet, wobei $R^2$ eine Alkylengruppe mit 2 bis 16 C-Atomen oder Phenyl und $R^1$ ein Wasserstoffatom oder eine Methylgruppe darstellen, mit der Maßgabe, daß im Durchschnitt mindestens 70% der Gesamtzahl an den Gruppen $R^1$ des Methyl-methylolgruppen enthaltenden Guanamins der Formel I Methylgruppen sind, bei einem pH-Wert zwischen 2,5 und 7 mit 0,1 bis 1 Mol, pro Grammäquivalent des Guanamin-Restes des Guanamins der Formel I, einer Verlängerungssubstanz der Formel III

$$R^4—NH—R^3—NH—R^5 \qquad (III)$$

in der entweder $R^3$ eine Carbonylgruppe und $R^4$ und $R^5$ jeweils Wasserstoff oder zusammen eine Alkylengruppe mit 2 bis 4 C-Atomen oder eine der Gruppen

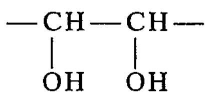 und 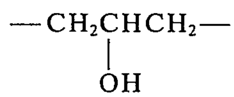

darstellen, oder aber $R^3$ einen Rest der Formel IV

$$—CO \cdot O—R^6—O \cdot CO— \qquad (IV)$$

oder einen Rest der Formel V

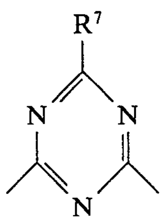

(V)

darstellt, wobei $R^6$ eine Alkylengruppe mit 2 bis 20 C-Atomen oder eine Arylengruppe mit 6 bis 12 C-Atomen und $R^7$ eine Alkylgruppe mit 1 bis 16 C-Atomen, Phenyl oder $—NH_2$ bedeuten, und $R^4$ und $R^5$ jeweils für Wasserstoff stehen.

Die Verlängerungsreaktion kann in Gegenwart und in Abwesenheit eines Säurekatalysators durchgeführt werden, vorzugsweise bei einem pH-Wert von 4 bis 7. Geeignete Säurekatalysatoren sind z. B. Ameisensäure, Phosphorsäure, aromatische Sulfonsäuren, insbesondere Toluol-p-sulfonsäure. Bevorzugt wird die Reaktion mit 0,2 bis 0,7 Mol der Verlängerungssubstanz der Formel III pro Grammäquivalent des Guanamin-Restes des Guanamins der Formel I durchgeführt, aber kleinere Mengen wie z. B. 0,125 Mol führen auch zum Erfolg.

Das erfindungsgemäße Verfahren wird vorzugsweise in der Weise durchgeführt, daß man die Reaktionsmischung in Gegenwart oder Abwesenheit eines inerten Lösungsmittels auf eine Temperatur zwischen 80° und 120° C erhitzt und 2 bis 6 Stunden lang bei dieser Temperatur hält.

Das Produkt kann durch Entfernung des Lösungsmittels und gegebenenfalls durch Entfernung der Säure nach bekannten Methoden gereinigt werden. Oft ist die Entfernung der Säure nicht erforderlich, da dieselbe nicht stört und sogar manchmal von Vorteil ist, da sie später die Härtung unterstützt. Das Produkt schmilzt im Bereich von 60 bis 130° C, vorzugsweise zwischen 60 und 90° C.

Die als Ausgangsprodukte für das neue Verfahren verwendeten, verätherten Methyl-methylolgruppen enthaltenen Guanamine der Formel I sind bekannte Materialien. Ihre Herstellung sind z. B. in dem GB-Patent No. 1 026 696 und in der DE-OS 2 031 035 beschrieben worden. Dieselben werden gewöhnlich durch Umsetzung eines Guanamins der Formel VI

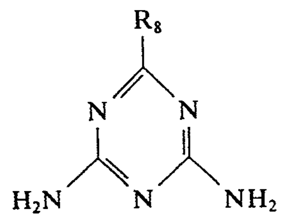

(VI)

in der $R_8$ eine Alkylgruppe mit 1 bis 16 C-Atomen, eine Phenylgruppe oder eine Gruppe der Formel VII

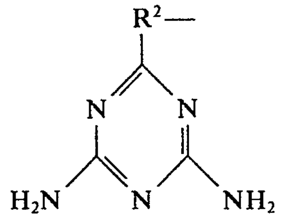

(VII)

in der $R^2$ wie oben definiert ist, mit mindestens 4 Molen, insbesondere mit 4,5 bis 7 Molen, Formaldehyd pro Grammäquivalent Guanaminrest in dem Guanamin der Formel VI in alkalischem Milieu, wobei die Verätherung über Methylolgruppen bei 50° bis 100° C im allgemeinen nach 1/4 bis 4 Stunden vollständig ist. Das Reaktionsgemisch wird dann mit mindestens 4 Mol Methanol pro Grammäquivalent Guanaminrest in dem Guanamin der Formel VI behandelt und angesäuert. Ein Überschuß an Methanol wird bevorzugt, wobei das Methanol bei der Umsetzung als Lösungsmittel wirkt. Für das Ansäuern wird eine starke Säure, wie HCl, vorzugsweise in einer solchen Menge, welche genügt um den pH auf den Bereich von 1,5—4 zu erniedrigen, verwendet. Die Reaktion kann bei Temperaturen zwischen 20° C und dem Siedepunkt der Mischung durchgeführt werden.

Als Guanamin der Formel I wird vorzugsweise ein solches eingesetzt, bei welchem in der Formel I der Rest R eine Alkylgruppe mit 1—4 C-Atomen bedeutet. Besonders bevorzugt sind solche aus der Reihe methyliertes Tetramethylolbenzoguanamin, methyliertes Tetramethylolacetoguanamin, methyliertes Octamethyloladipoguanamin und methyliertes Octamethylolbernsteinguanamin.

Bevorzugt eingesetzte Verlängerungssubstanzen der Formel III sind solche aus der Reihe Harnstoff, Melamin, Ethylendicarbamat, 1,4-Butylendicarbamat, 1,2-Dihydroxyethylenharnstoff, Benzoguanamin, Acetoguanamin, Ethylenharnstoff und 1,3-Propylenharnstoff.

Weiterer Gegenstand der Erfindung ist auch ein verlängertes Methyl- und Methylolgruppen enthaltendes Guanaminharz, welches durch das erfindungsgemäße Verfahren erhalten wurde, mit einem Schmelzpunkt zwischen 60° und 130° C.

Weiterer Gegenstand der Erfindung ist auch die Verwendung des nach dem erfindungsgemäßen Verfahren hergestellten verlängerten Methyl-methylolgruppen enthaltenden Guanaminharzes zum Beschichten, welche dadurch gekennzeichnet ist, daß man auf die Oberfläche eines Substrates dieses Harz aufbringt und erhitzt.

Bei dem Aufbringen des Harzes kann man von der Lösung desselben in einem organischen Lösungsmittel (auch Lösungsmittelgemisch) ausgehen. Die Harze können auch mit Pigmenten, Koreaktenten, Farbstoffen und dergleichen gemischt werden. Grundsätzlich können sie aber auch in Form von Beschichtungspulvern angewendet werden. Nach eventueller Vermischung mit Substanzen obiger Art wird durch Mahlung ein feines Pulver mit Korngrößen zwischen 0,015 und 500 μm hergestellt.

Die bevorzugte erfindungsgemäße Verwendung ist dadurch gekennzeichnet, daß man das verlängerte Harz in Gegenwart eines mitreagierenden zusätzlichen Harzes erhitzt, welches pro Molekül durchschnittlich mindestens 2 Gruppen aus der Reihe alkoholische Hydroxylgruppen, Carboxylgruppen und Carboxylamidgruppen enthält. Derartige Substanzen sind beispielsweise Alkydharze, Polyester, OH-Gruppen aufweisende Epoxidharze und Acrylsäureharze; weiter Copolymere von Styrol und/oder (Meth)acrylsäureester mit kleinen Anteilen von (Meth)acrylamid und (Meth)acrylsäure wie in dem GB-Patent No. 1 026 696 beschrieben.

Die Beschichtungsmittel werden mittels konventioneller Vorrichtungen für flüssige oder pulverförmige Beschichtungskompositionen appliziert. Nach dem Trocknen (falls erforderlich) werden sie bei Raumtemperatur oder höheren Temperaturen, gewöhnlich 35° bis 300° C, vorzugsweise 100° bis 225° C, gehärtet. Die Beschichtungen weisen einen sehr guten Glanz, Farbe, Härte und Widerstand gegen Fett, Flecken und Detergentien auf.

Die Erfindung wird in den folgenden Beispielen näher erläutert. Darin bedeuten, wenn nicht ausdrücklich anders angegeben, Teile Gewichtsteile. Die Erweichungspunkte werden mittels einer Kofler-Bank bestimmt.

## Beispiel 1

### A) Herstellung eines Methyl-methylolgruppen enthaltenden Guanaminharzes

387,2 g Methanol, 444,6 g Paraformaldehyd (91% Reinheit), 841,5 g Benzoguanamin und 54 ml einer 20gewichts-%igen wäßrigen NaOH-Lösung werden zusammen gerührt und 1 Stunde lang auf 70° C erhitzt. Eine weitere Menge von 444,6 g Paraformaldehyd und von 54 ml der 20%igen NaOH-Lösung wird zugegeben und es wird 1 weitere Stunde auf 70° erhitzt.

Die Mischung wird auf 45—50° C abgekühlt und es wird soviel an konzentrierter Salzsäure zugegeben, bis der pH-Wert der Reaktionsmischung bei 8,6—8,8 liegt (ca. 2,5 ml erforderlich). Methanol (2,475 kg) wird zugesetzt. Kühlung auf 36° C.

67,5 ml konz. HCl werden zugegeben und die Mischung wird 2 Stunden lang bei 40° C gerührt. Nach Einstellung des pH-Wertes auf 8,6—8,8 mittels 20%iger NaOH-Lösung (ca. 117 ml) wird die Mischung zur Entfernung von wäßrigem Methanol unter Wasserstrahlpumpen-Vacuum destilliert. Wenn die Temperatur des Destillationsrückstandes 70° C erreicht, werden 100 ml Wasser zugegeben, und es wird soweit destilliert, bis der Rückstand eine Temperatur von 100—110° C erreicht. Der Rückstand wird dann auf 90° C gekühlt und zwecks Entfernung des NaCl filtriert. Das Filtrat besteht aus einem hoch methyliertem Tetramethylolbenzoguanamin-Harz (1550 g), eine farblose klare Flüssigkeit mit einem Brechungsindex $n_D^{25}$ von 1,5700—1,5750 und einer Viskosität bei 25° C von 20—25 PaS. Der Methylierungsgrad (d. h. der Anteil der Gruppen $R^1$, welche Methylgruppen sind) beträgt 82,5%.

### B) Verlängerung

104,54 g des so erhaltenen Harzes und 27,81 g (d. h. 0,51 Mol/Grammäquivalent Guanamin-Rest in dem Harz) Benzoguanamin werden gemischt und 15 Min. bei 100° C gerührt. 0,4 ml einer 50%igen Toluol-p-sulfonsäure in Methanol werden zugegeben. Die so erhaltene Mischung mit einem pH-Wert von 5,0 wird weitere 2¹/₂ Stunden bei 100° C gerührt. Alle verdampfbaren Stoffe werden entfernt, wenn sie sich gebildet haben. Nach Beendigung des Erhitzens hat der Rückstand einen Erweichungspunkt von 60° C.

Das Produkt entspricht im wesentlichen der Formel VIII

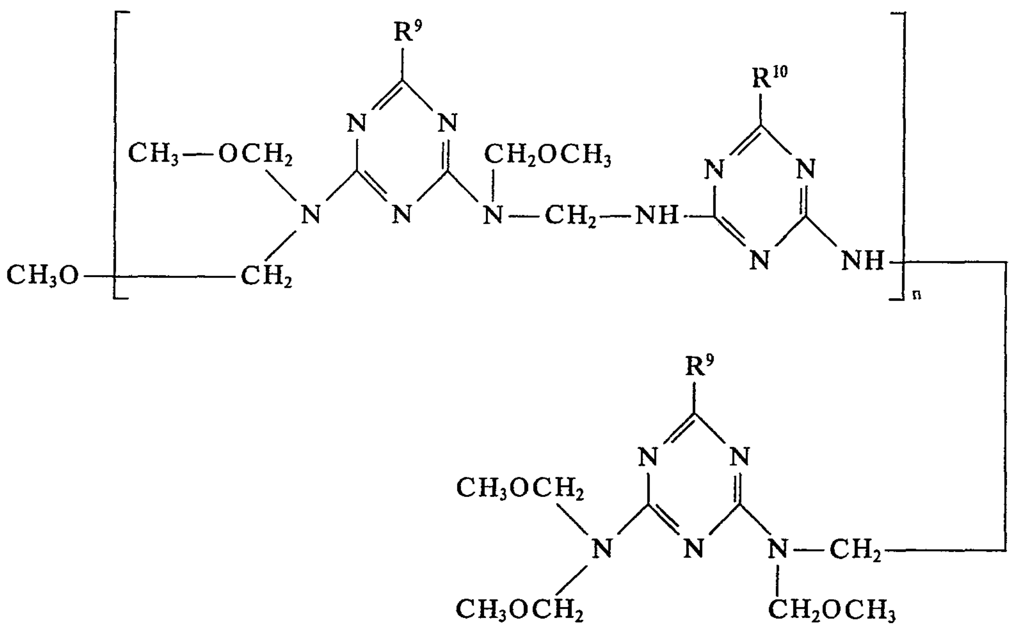

(VIII)

in der n eine Zahl von durchschnittlich 0,8 und $R^9$ und $R^{10}$ je eine Phenylgruppe bedeuten, wobei n durch Dampfdruck-Osmose-Messung bestimmt wird.

Beispiel 2

A) Herstellung eines Methyl-methylolgruppen enthaltenden Guanaminharzes

600 g Acetoguanamin und 939 g einer methanolischen Formaldehydlösung (44% Methanol, 46% Formaldehyd, 10% Wasser) werden mit 57,6 ml einer wäßrigen 20%igen NaOH-Lösung gemischt und auf 70°C erhitzt. Nach 1 Stunde werden 474 g 91%igen Formaldehyds und 57,6 ml der wäßrigen 20%igen NaOH-Lösung zugegeben und die Reaktion wird eine weitere Stunde fortgesetzt. Die Lösung wird mit Salzsäure neutralisiert. Danach werden 2640 g Methanol zugesetzt und die Lösung wird auf 37°C gekühlt. Nach Zugabe von 72 ml Salzsäure wird die Reaktion weitere 2 Stunden fortgesetzt. Nach Neutralisation des Gemisches durch Zusatz von 20%iger wäßriger NaOH-Lösung werden der Überschuß an Methanol und Wasser durch Destillation unter Unterdruck entfernt. Das Produkt, ein hoch methyliertes Tetramethylolacetoguanamin, welches zwecks Entfernung von NaCl filtriert wird, ist eine viskose Flüssigkeit. Der Grad der Methylierung beträgt etwa 80%.

B) Verlängerung

Zu 689 Teilen der so erhaltenen Flüssigkeit werden 162,5 Teile Acetoguanamin gegeben (d. h. 0,5 Mol pro Grammäquivalent Guanaminrest in dem Harz).

Die Mischung wird auf 120°C erhitzt. Nach 15 Minuten werden 1,3 Teile Toluol-p-sulfonsäure-Lösung (50% in Methanol) gegeben. die Reaktion wird bei 120°C so lange fortgesetzt, bis das Produkt einen Erweichungspunkt von 75°C aufweist. Der Katalysator wird mit N-Benzyldimethylamin neutralisiert und das Produkt in einer Schale zum Erstarren gebracht. Es entspricht im wesentlichen der Formel VIII, worin $R^9$ und $R^{10}$ Methylgruppen bedeuten und n einen geschätzten durchschnittlichen Wert von 1,0 darstellt.

Beispiel 3

Es wird gemäß Beispiel 2 verfahren mit dem Unterschied, daß bei der Verlängerungsreaktion nur 108 Teile anstelle von 162,5 Teilen Acetoguanamin eingesetzt werden; d. h. 0,33 Mol pro Grammäquivalent Guanaminrest in dem Harz. Das Erhitzen auf 120°C wird 10 Stunden lang fortgesetzt, wonach das Produkt einen Erweichungspunkt von 75°C aufweist. Dieses Produkt entspricht der Formel VIII, worin $R^9$ und $R^{10}$ Methylgruppen bedeuten und n einen geschätzten durchschnittlichen Wert von 0,66 darstellt.

Beispiel 4

Es wird gemäß Beispiel 2 verfahren, jedoch mit dem Unterschied, daß bei der Verlängerungsreaktion anstelle von 162,5 Teilen Acetoguanamin 243 Teile Benzoguanamin eingesetzt werden; d. h. 0,5 Mol pro Grammäquivalent Guanamin-Rest in dem Harz. Die Umsetzung wird fortgesetzt, bis das Produkt einen Erweichungspunkt von 60°C aufweist. Es entspricht der Formel VIII, in der $R^9$ eine Methylgruppe und $R^{10}$ eine Phenylgruppe bedeuten und n einen geschätzten durchschnittlichen Wert von 1,0 darstellen.

Beispiel 5

Die Produkte der Beispiele 1, 2 und 4 werden jeweils mit einem gleichen Gewicht entweder eines festen, hydroxylhaltigen Polyesterharzes (OH-Gehalt 3,4 Äquivalente/kg; hergestellt nach herkömmlicher Weise aus Cyclohexandimethanol, Trimethylolpropan, Neopentylglycol und Dimethylterephthalat) oder eines festen, hydroxylhaltigen Acrylsäureesters (OH-Gehalt 1,91 Äquivalente/kg; hergestellt in bekannter Weise aus 70% Methylmethacrylat und 30% 2-Hydroxyethylmethacrylat vermischt. Zur Erleichtung der Anwendung werden die Mischungen in Xylol/n-Butanol (Volumenverhältnis 1 : 1) gelöst (50%igen Lösungen). Die Lösungen werden mittels eines drahtumwickelten Stabes auf Glas- oder Metallplatten appliziert, so daß Beschichtungen von 37,5 µm Stärke entstehen. Letztere werden 15 Minuten bei 180° bis 200°C gehärtet. Über Nacht werden sie einer relativen Feuchtigkeit von 65% bei 15,5°C ausgesetzt. Danach werden jeweils die Persoz-Härte und der Aceton-Reibungswiderstand gemessen (20maliges Reiben mit einem acetongetränkten Baumwollschrubber). Die Resultate sind in Tabelle I zusammengestellt.

Tabelle I

| Produkt vom Beispiel | Co-reaktant | Härtungs-Temp. °C | Härte (Persoz) | Aceton-Beständigkeit |
|---|---|---|---|---|
| 1 | Polyester | 180 | 312 | keine Einwirkung |
| 1 | Acrylharz | 180 | 274 | keine Einwirkung |
| 1 | Polyester | 200 | 289 | keine Einwirkung |
| 1 | Acrylharz | 200 | 286 | keine Einwirkung |
| 2 | Polyester | 180 | 270 | leichte Erweichung |
| 2 | Acrylharz | 180 | 256 | keine Einwirkung |
| 2 | Polyester | 200 | 255 | leichte Erweichung |
| 2 | Acrylharz | 200 | 263 | keine Einwirkung |
| 4 | Polyester | 180 | 289 | Erweichung |
| 4 | Acrylharz | 180 | 291 | keine Einwirkung |
| 4 | Polyester | 200 | 301 | leichte Erweichung |
| 4 | Acrylharz | 200 | 256 | keine Einwirkung |

## Beispiel 6

Wie in Teil A von Beispiel 1 beschrieben, wird ein hoch methyliertes Tetramethylolbenzoguanamin-Harz hergestellt. 104,5 g dieses Harzes werden unter Rühren 15 Minuten lang bei 100°C mit 14,9 g 1,3-Propylenharnstoff verlängert (0,5 Mol pro Grammäquivalent des Guanaminrestes in dem Harz). 0,4 ml einer methanolischen 50%igen Toluol-p-sulfonsäure werden zugesetzt, wonach der pH bei 5,2 liegt. Es wird weiter 4 Stunden auf 100°C erwärmt, wobei alle flüchtigen Stoffe, welche sich bilden, entfernt werden. Das Produkt weist einen Erweichungspunkt von 65°C auf. Der Katalysator wird mit N-Benzyldimethylamin neutralisiert.

## Beispiel 7

Es wird nach Beispiel 6 verfahren, nur mit dem Unterschied, daß anstelle von 14,9 g Propylenharnstoff 6,95 g Benzoguanamin eingesetzt werden (d. h. 0,125 g Mol pro Grammäquivalent Guanaminrest in dem Harz). Der Erweichungspunkt dieses Produktes liegt bei 67°C.

## Beispiel 8

Es wird nach Beispiel 6 verfahren, mit dem Unterschied, daß anstelle von 1,3-Propylenharnstoff 14,2 g Ethylenharnstoff (Reinheit 90%, Rest Wasser) eingesetzt werden (d. h. 0,5 Mol pro Grammäquivalent Guanaminrest im Harz). Der Erweichungspunkt beträgt 55°C.

## Beispiel 9

Es wird nach Beispiel 6 verfahren, nur mit dem Unterschied, daß anstelle von 1,3-Propylenharnstoff 13,5 g Melamin verwendet werden (d. h. 0,36 Mol pro Grammäquivalent Guanaminrest in dem Harz). Erweichungspunkt des erhaltenen opaken Harzes: 74°C.

Beispiel 10

Es wird nach Beispiel 6 verfahren, mit dem Unterschied, daß anstelle von 1,3-Propylenharnstoff 8,9 g Harnstoff eingesetzt werden (d. h. 0,5 Mol pro Grammäquivalent Guanaminrest im Harz). Erweichungspunkt des erhaltenen Harzes: 60° C.

Beispiel 11

Es wird gemäß Beispiel 6 verfahren. Anstelle von 1,3-Propylenharnstoff werden 17,6 g 1,2-Dihydroxyethylenharnstoff eingesetzt (d. h. 0,5 Mol pro Grammäquivalent Guanaminrest im Harz). Das erhaltene Produkt weist einen Erweichungspunkt von 70° C auf.

Beispiel 12

Es werden Pulverbeschichtungs-Kompositionen (Mischungen) aus den Produkten gemäß Beispiel 6 und 7 hergestellt.
Die Zusammensetzungen der Kompositionen sind in Tabelle II zusammengestellt.

Tabelle II

| Mischung | Teile in der Mischung | | | |
|---|---|---|---|---|
| | A | B | C | D |
| Produkt nach Beispiel 6 | 50 | – | 55 | – |
| Produkt nach Beispiel 7 | – | 50 | – | 55 |
| Polyester I*) | 240 | 240 | – | – |
| Polyester II*) | – | – | 200 | 200 |
| Polyacrylsäure-Harz (ein handelsübliches Fließhilfsmittel) | 5 | 5 | 5 | 5 |
| Benzoin (als Verlaufsmittel) | 3 | 3 | 3 | 3 |
| Titandioxid | 200 | 200 | 175 | 175 |

*) Polyester I ist ein ölfreier, hydroxylgruppen-haltiger Polyester, welcher unter der Handelsbezeichnung »Uralac P 2115«® von der Firma Synthetic Desins Ldt., Speke, Liverpool (GB) erhältlich ist. Er weist folgende Eigenschaften auf: Säurezahl: weniger als 10 mg KOH/g; Hydroxylzahl: 30–40 mg KOH/g; Erweichungspunkt (gemäß ASTM E 28–67 ohne Rührer): 110°–120°C.

**) Polyester II mit der Handelsbezeichnung BA 530® ist bei der Firma BIP Chemicals Ltd., Oldbury, Worley, Worcestershire (GB) erhältlich. Säurezahl: ca. 7,5 mg KOH/g; Hydroxylzahl: 90–110 mg KOH/g; Erweichungspunkt (BS 2782 – Method 103 A): 90–97°C.

Die Mischung erfolgt durch Trockenmischung der Substanzen, an die sich eine Heiß-Schmelz-Extrusion in einem Buss-Kokneter® (Zylindertemp. 95° C; Schneckentemp. 40° C) anschließt. Das extrudierte Material wird auf Raumtemperatur abgekühlt, zerkleinert und auf eine Korngröße von unter 75 µm gemahlen. Die Masse besteht aus Korngrößen zwischen 20 und 75 µm. Die Mischungen weisen folgende Gelierzeiten auf:

Mischung A: 9 Minuten
Mischung B: 7 Minuten
Mischung C: 8 1/2 Minuten
Mischung D: 7 Minuten

Die Mischungen werden mittels einer elektrostatischen Sprühvorrichtung auf Stahl- oder

chromatbehandelte Aluminiumplatten gebracht und bei 200°C 20 Minuten gehärtet. Die erhaltenen 50 µm starken Beschichtungen werden wie folgt geprüft:

Der »EMK-Widerstand« (EMK=Ethylmethylketon) wird in der Weise bestimmt, daß man die Platten 20mal Doppelreibungen mit einem mit Ethylmethylketon getränkten Baumwollschrubber aussetzt.

Die »Flexibilität« wird in der Weise bestimmt, daß man die Platte jeweils um Dorne mit absteigenden Durchmessern biegt, um dadurch den kleinsten Durchmesser zu ermitteln, wo noch kein Brechen der Beschichtung eintritt.

Der »Glanz« wird nach der Methode BS 3900 Teil D2 (1967) unter Anwendung eines Einfallswinkel von 60° bestimmt.

Die Ergebnisse sind in Tabelle III zusammengestellt.

Tabelle III

| Mischung | EMK-Widerstand | Flexibilität | Glanz | Beurteilung |
|---|---|---|---|---|
| A | ohne Wirkung | 3 mm | 60% | hart, glänzend, leicht orangenfarbig |
| B | ohne Wirkung | 1,5 mm | 22% | hart, glatt, matt |
| C | ohne Wirkung | 12 mm | 40% | hart, glänzend, leicht orangenfarbig |
| D | ohne Wirkung | 12 mm | 20% | hart, glatt, matt |

**Patentansprüche**

1. Verfahren zur Herstellung eines verlängerten, Methyl-methylolgruppen enthaltenden Guanaminharzes durch Reaktion eines Methyl-methylolgruppen enthaltenden Guanamins der Formel I

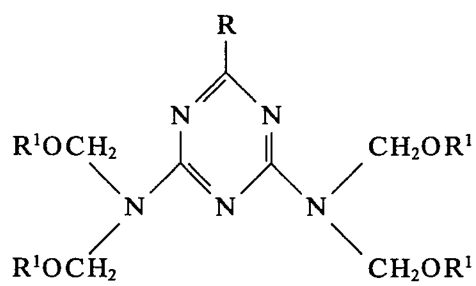

(I)

in der R eine Alkylgruppe mit 1 bis 16 C-Atomen, eine Phenylgruppe oder eine Gruppe der Formel II

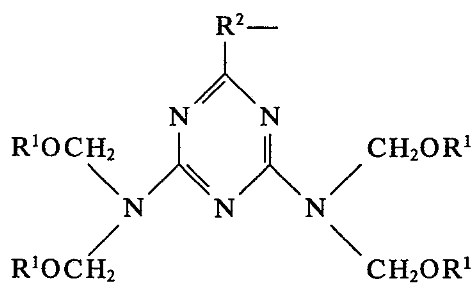

(II)

bedeutet, wobei $R^2$ eine Alkylengruppe mit 2 bis 16 C-Atomen oder Phenyl und $R^1$ ein Wasserstoffatom oder eine Methylgruppe darstellen, mit der Maßgabe, daß im Durchschnitt mindestens 70% der Gesamtzahl an den Gruppen $R^1$ des Methyl-methylolgruppen enthaltenden Guanamins der Formel I Methylgruppen sind, bei einem pH-Wert zwischen 2,5 und 7 mit 0,1 bis 1 Mol, pro Grammäquivalent des Guanamin-Restes des Guanamins der Formel I, einer Verlängerungssubstanz der Formel III

$$R^4—NH—R^3—NH—R^5 \quad (III)$$

in der entweder $R^3$ eine Carbonylgruppe und $R^4$ und $R^5$ jeweils Wasserstoff oder zusammen eine Alkylengruppe mit 2 bis 4 C-Atomen oder eine der Gruppen

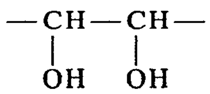 und 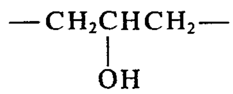

darstellen, oder aber $R^3$ einen Rest der Formel IV

$$—CO \cdot O—R^6—O \cdot CO— \quad (IV)$$

oder einen Rest der Formel V

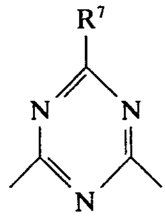

(V)

darstellt, wobei $R^6$ eine Alkylengruppe mit 2 bis 20 C-Atomen oder eine Arylengruppe mit 6 bis 12 C-Atomen und $R^7$ eine Alkylgruppe mit 1 bis 6 C-Atomen, Phenyl oder $—NH_2$ bedeuten, und $R^4$ und $R^5$ jeweils für Wasserstoff stehen.

2. Verfahren nach Anspruch 1, dadurch gekennzeichnet, daß die Reaktion bei einem pH-Wert zwischen 4 und 7 ausgeführt wird.

3. Verfahren nach Anspruch 1, dadurch gekennzeichnet, daß man 0,2 bis 0,7 Mol der Verlängerungssubstanz der Formel III pro Grammäquivalent des Guanamin-Restes des Guanamins der Formel I einsetzt.

4. Verfahren nach Anspruch 1, dadurch gekennzeichnet, daß man die Reaktionsmischung auf eine Temperatur zwischen 80° und 120° C erhitzt und 2 bis 6 Stunden lang bei dieser Temperatur hält.

5. Verfahren nach Anspruch 1, dadurch gekennzeichnet, daß man ein Guanamin der Formel I einsetzt, in der R eine Alkylgruppe mit 1 bis 4-C-Atomen bedeutet.

6. Verfahren nach Anspruch 1, dadurch gekennzeichnet, daß man als Guanamin der Formel I ein solches aus der Reihe methyliertes Tetramethylolbenzoguanamin, methyliertes Tetramethylolacetoguanamin, methyliertes Octamethyloladipoguanamin und methyliertes Octamethylolbernsteinguanamin einsetzt.

7. Verfahren nach Anspruch 1, dadurch gekennzeichnet, daß man als Verlängerungssubstanz der Formel III eine solche aus der Reihe Harnstoff, Melamin, Ethylendicarbamat, 1,4-Butylendicarbamat, 1,2-Dihydroxyethylenharnstoff, Benzoguanamin, Acetoguanamin, Ethylenharnstoff und 1,3-Propylenharnstoff einsetzt.

8. Ein verlängertes Methyl- und Methylolgruppen enthaltendes Guanaminharz, welches durch das Verfahren nach Anspruch 1 erhalten wurde, mit einem Schmelzpunkt zwischen 60° und 130° C.

9. Verwendung des nach dem Verfahren gemäß Anspruch 1 hergestellten verlängerten Methyl-methylolgruppen enthaltenden Guanaminharzes zum Beschichten, dadurch gekennzeichnet, daß man auf die Oberfläche eines Substrates dieses Harz aufbringt und erhitzt.

10. Verwendung nach Anspruch 9, dadurch gekennzeichnet, daß man das verlängerte Harz in Gegenwart eines mitreagierenden zusätzlichen Harzes erhitzt, welches pro Molekül durchschnittlich mindestens 2 Gruppen aus der Reihe alkoholische Hydroxylgruppen, Carboxylgruppen und Carboxylamidgruppen enthält.

**Claims**

1. A process for the preparation of an advanced methylated methylolated guanamine resin, which comprises reaction of a methylated methylolated guanamine of the formula

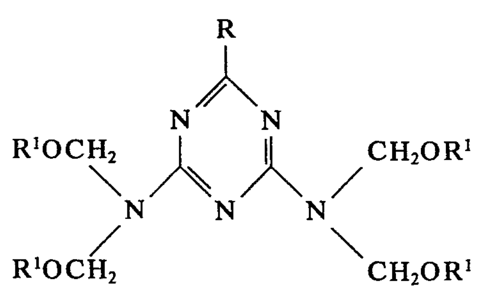

(I)

wherein R is an alkyl group of 1 to 16 carbon atoms, a phenyl group, or a group of the formula

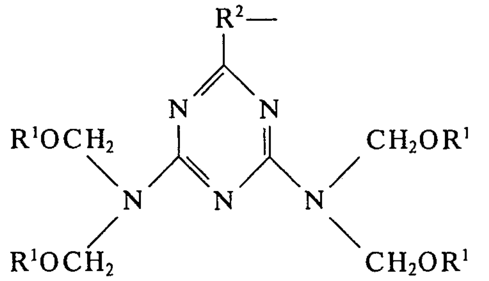

(II)

wherein $R^2$ is an alkylene group of 2 to 16 carbon atoms or phenyl, and $R^1$ is a hydrogen atom or a methyl group, with the proviso that, on average, at least 70% of the total number of groups $R^1$ on the methylated metholated guanamine of the formula I are methyl groups, at a pH from 2.5 to 7, with 0.1 mole to 1 mole, per gram equivalent of guanamine residue in the guanamine of the formula I, of an advancement agent of the general formula III

$$R^4—NH—R^3—NH—R^5 \qquad (III)$$

wherein either $R^3$ is a carbonyl group and each of $R^4$ and $R^5$ is hydrogen or both together are an alkylene chain having from 2 to 4 carbon atoms or one of the groups

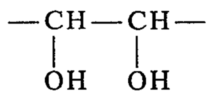

and

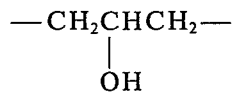

or $R^3$ is a residue of the formula IV

$$—CO \cdot O—R^6—O \cdot CO— \qquad (IV)$$

or a redisue of the formula

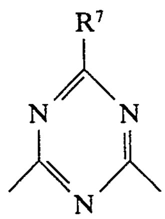

(V)

wherein $R^6$ is an alkylene group of 2 to 20 carbon atoms or an arylene group of 6 to 12 carbon atoms, and $R^7$ is an alkyl, group of 1 to 16 carbons atoms, phenyl or $NH_2$, and each of $R^4$ and $R^5$ is hydrogen.

2. A process according to claim 1, wherein the reaction is carried out at a pH of 4 to 7.

3. A process according to claim 1, wherein 0.2 to 0.7 mole of advancement agent of the formula III is used per gram equivalent of guanamine residue in the guanamine of the formula I.

4. A process according to claim 1, wherein the reaction mixture is heated to a temperature between 80° and 120° C for 2 to 6 hours.

5. A process according to claim 1, wherein there is used a guanamine of the formula I in which R is an alkyl group of 1 to 4 carbon atoms.

6. A process according to claim 1, wherein the guanamine of the formula I is one selected from the series consisting of methylated tetramethylolbenzoguanamine, methylated tetramethylolacetoguanamine, methylated octamethyloladipoguanamine and methylated octamethylolsuccinoguanamine.

7. A process according to claim 1, wherein the advancement agent of the formula III is one selected from the series consisting of urea, melamine, ethylene dicarbamate, 1,4-butylene dicarbamate, 1,2-dihydroxyethylene urea, benzoguanamine, acetoguanamine, ethylene urea and 1,3-propylene urea.

8. An advanced methylated methylolated guanamine resin prepared by the process according to claim 1 and having a melting point between 60° and 130° C.

9. Use of an advanced methylated methylolated guanamine prepared by the process according to claim 1 for coating, which comprises applying said resin to the surface of a substrate and heating it.

10. Use according to claim 9, wherein the advanced resin is heated in the presence of an additional resin which contains, per molecule, on average at least 2 groups selected from the series consisting of alcoholic hydroxyl groups, carboxyl groups and carboxamide groups.

**Revendications**

1. Procédé de préparation d'une résine de guanamine contenant des radicaux méthyl-méthylols et allongée, par réaction d'une guanamine contenant des radicaux méthyl-méthylols et répondant à la formule I

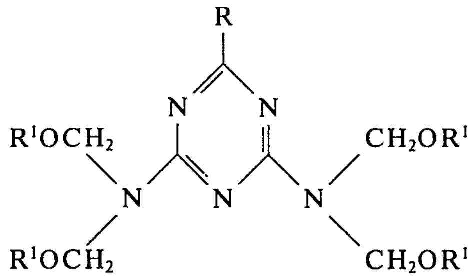

(I)

dans laquelle R représente un radical alkyle contenant de 1 à 16 atoms de carbone, un radical phényle ou un radical de formule II

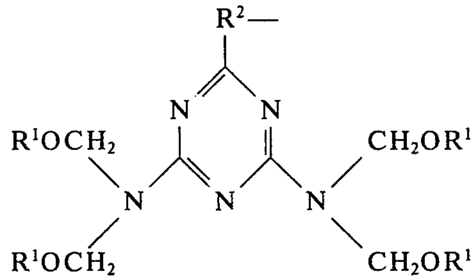

(II)

**($R^2$ désignant un radical alkylène contenant de 2 à 16 atomes de carbone ou un radical phénylène) et $R^1$ représente un atome d'hydrogène ou un radical méthyle, avec la condition qu'au moins 70% en moyenne du nombre total des radicaux $R^1$ de la guanamine à groupes méthyl-méthylols de formule I soient des radicaux méthyles, à un pH compris entre 2,5 et 7, avec de 0,1 à 1 mole, par équivalent-gramme du radical guanamine de la guanamine de formule I, d'une substance d'allongement répondant à la formule III**

$$R^4—NH—R^3—NH—R^5 \qquad \text{(III)}$$

dans laquelle ou bien $R^3$ représente un groupe carbonyle et $R^4$ et $R^5$ représentent chacun un atome d'hydrogène ou forme ensemble un radical alkylène contenant de 2 à 4 atomes de carbone ou l'un des radicaux

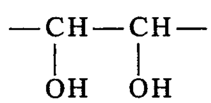

et

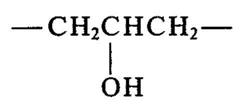

ou bien $R^3$ représente un radical répondant à l'une des formule IV et V:

$$—CO \cdot O—R^6—O \cdot CO— \qquad \text{(IV)}$$

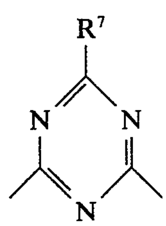

(V)

**dans lesquelles $R^6$ représente un radical alkylène contenant de 2 à 20 atomes de carbone ou un radical arylène contenant de 6 à 12 atomes de carbone et $R^7$ représente un radical alkyle contenant de 1 à 16 atomes de carbone, un radical phényle ou un groupe $—NH_2$, et $R^4$ et $R^5$ représentent chacun l'hydrogène.**

2. Procédé selon la revendication 1, caractérisé en ce qu'on effectue la réaction à un pH compris entre 4 et 7.

3. Procédé selon la revendication 1, caractérisé en ce qu'on utilise de 0,2 à 0,7 mole de la substance d'allongement de formula III par équivalent-gramme du radical guanamine de la guanamine de formule I.

4. Procédé selon la revendication 1, caractérisé en ce qu'on chauffe le mélange réactionnel à une température comprise entre 80 et 120° C et on le maintient à cette température pendant 2 à 6 heures.

5. Procédé selon la revendication 1, caractérisé en ce qu'on utilise une guanamine de formule I dans laquelle R représente un radical alkyle contenant de 1 à 4 atomes de carbone.

6. Procédé selon la revendication 1, caractérisé en ce qu'on utilise une guanamine de formule I qui est une tétraméthylol-benzoguanamine méthylée, une tétraméthylol-acétoguanamine méthylée, une octaméthylol-adipoguanamine méthylée et/ou une octaméthylol-succinoguanamine méthylée.

7. Procédé selon la revendication 1, caractérisé en ce que la substance d'allongement de formule III que l'on utilise est prise dans l'ensemble constitué par l'urée, la mélamine, le dicarbamate de l'éthylèneglycol, le dicarbamate du butano-diol-1,4, la dihydroxy-1,2 éthylène-urée, la benzoguanamine, l'acétoguanamine, 1'éthylène-urée et la propylène-1,3 urée.

8. Résine de guanamine contenant des radicaux méthyles et méthylols, allongée, qui a été obtenue par le procédé de la revendication 1 et qui fond entre 60 et 130° C.

9. Utilisation, pour l'enduction, de la résine de guanamine contenant des radicaux méthyl-méthylols et allongée qui a été préparée par le procédé de la revendication 1, utilisation caractérisée en ce qu'on applique cette résine sur la surface d'un substrat et on chauffe.

10. Utilisation selon la revendication 9, caractérisée en ce qu'on schauffe la résine allongée en présence d'une résine supplémentaire qui est capable de réagir et qui contient en moyenne, par molécule, au moins deux groupes pris dans l'ensemble constitué par les groupes hydroxy alcooliques, les groupes carboxy et les groupes carbamoyles.